(19) Europäisches Patentamt / European Patent Office / Office européen des brevets

(11) **EP 3 907 787 A1**

(12) **EUROPEAN PATENT APPLICATION**
published in accordance with Art. 153(4) EPC

(43) Date of publication:
**10.11.2021 Bulletin 2021/45**

(21) Application number: **20864326.2**

(22) Date of filing: **10.03.2020**

(51) Int Cl.:
***H01M 4/13*** *(2010.01)*

(86) International application number:
**PCT/CN2020/078645**

(87) International publication number:
**WO 2021/179172 (16.09.2021 Gazette 2021/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Ltd.**
**Ningde City, Fujian 352100 (CN)**

(72) Inventor: **YAN, Dongyang**
**Ningde**
**Fujian 350900 (CN)**

(74) Representative: **Icosa**
**83 avenue Denfert-Rochereau**
**75014 Paris (FR)**

(54) **CELL AND BATTERY HAVING SAID CELL**

(57) The cell includes an electrode assembly, a package that receives the electrode assembly and an electrolyte solution. The electrolyte solution is received into the package. The electrode assembly is formed by sequential winding or stacking of a cathode plate, a separator and an anode plate. The anode plate includes a first current collector and a first active substance layer arranged on the first current collector. The electrolyte solution includes a lithium salt. A thickness a of an anode current collector satisfies the following formula: $0.02T/(L+5) \times c \leq a \leq (0.3L^2)/(GT^2)$, wherein T is a thickness of the cell, c is a concentration of the lithium salt, G is a rigidity of the cell in a width direction, and L is a number of layers of the electrode assembly. The cell has a high mechanical strength. The application further provides a battery with the cell.

10

Fig. 1

EP 3 907 787 A1

**Description**

**Field**

The application relates to the field of electrochemistry, in particular to a cell and a battery with the same.

**Background**

With the continuous increase of energy density and service voltage, the safety performance of a cell will gradually decline under the condition of external mechanical force (such as high-speed impact, heavy object squeeze and drop), exposing users to risks during use.

**Summary**

In view of this, it is necessary to provide a cell with high mechanical strength to improve its safety performance.

The embodiments of the application provide a cell, including an electrode assembly, a package accommodating the electrode assembly and an electrolyte solution, wherein the electrolyte solution is received in the package, the electrode assembly is formed by sequential winding or stacking of a cathode plate, a separator and an anode plate, the anode plate includes a first current collector and a first active substance layer arranged on the first current collector, the electrolyte solution includes a lithium salt, the anode plate, the cathode plate adjacent to the anode plate and two layers of the separator adjacent to the anode plate or the cathode plate are defined as one layer of the electrode assembly, and a thickness a (in mm) of the anode current collector satisfies the following formula: $0.02T/(L+5) \times c \leq a \leq (0.3L^2)/(GT^2)$, which is calculated by numerical values of various parameters, wherein T is a thickness of the cell (in mm), c is a concentration of the lithium salt (in mol/L), G is a rigidity of the cell in a width direction (in N/mm), and L is a number of layers of the electrode assembly.

In some embodiments, a thickness of the cell is 1 mm~12 mm.

In some embodiments, a thickness of the first current collector is 0.003 mm~0.04 mm.

In some embodiments, a rigidity of the cell in a width direction is 50 N/mm~400 N/mm.

In some embodiments, a concentration of the lithium salt is 0.5 mol/L~2 mol/L.

In some embodiments, a transverse strength of the first current collector is 50 MPa~600 MPa.

In some embodiments, a longitudinal strength of the first current collector is 50 MPa~600 MPa.

In some embodiments, the cathode plate includes a second current collector and a second active substance layer arranged on the second current collector, and a transverse strength of the second current collector is 50 MPa~300 MPa.

In some embodiments, a longitudinal strength of the second current collector is 50 MPa~300 MPa.

In some embodiments, the first active substance layer includes a first active substance and a first adhesive agent, a mass fraction of the first active substance is 97%~99%, and a mass fraction of the first adhesive agent is 0.5%~1.5%.

In some embodiments, monomer products, produced from a test for the first adhesive agent by a pyrolysis gas chromatography mass spectroscopy (PY-GCMS), include one or more of butadiene, acrylonitrile, styrene, methyl methacrylate, butyl acrylate, vinyl pyrrolidone, ethylhexyl methacrylate, iso-octyl acrylate, polyvinylidene fluoride, 9-octadecenenitrile, propyl propionate, ethyl propionate, polyacrylic acid (PAA), N-methylpyrrolidone and 4-phenylcyclohexanone.

In some embodiments, the second active substance layer includes a second active substance and a second adhesive agent, a mass fraction of the second active substance is 96%~99%, and a mass fraction of the second adhesive agent is 0.5%~2%.

In some embodiments, the second adhesive agent includes one or more of copolymers of polyethylene oxide, polyvinylidene fluoride, butadiene styrene rubber, vinylidene fluoride and hexafluoropropylene.

In some embodiments, monomer products, produced from a test for the second adhesive agent by a pyrolysis gas chromatography mass spectroscopy (PY-GCMS), include one or more of butadiene, acrylonitrile, styrene, methyl methacrylate, butyl acrylate, vinyl pyrrolidone, ethylhexyl methacrylate, iso-octyl acrylate, polyvinylidene fluoride, 9-octadecenenitrile, propyl propionate, ethyl propionate, polyacrylic acid (PAA), N-methylpyrrolidone and 4-phenylcyclohexanone.

In some embodiments, the second active substance layer further includes a conductive agent, a mass fraction of which is 0.5% ~ 2%.

In some embodiments, the conductive agent includes one or more of acetylene black, carbon black, conductive carbon black (Super P), Ketjen black, single-walled carbon nanotube, multi-walled carbon nanotube, carbon nanofiber and graphene.

In some embodiments, the first current collector includes one or more of elements, including Al, Ni, Mn, Cr, Cu, Fe, Mg, Si, Ti, Zr, V, Zn, Pb, S, P, Sn, As, Bi and Sb.

In some embodiments, the second current collector includes one or more of elements, including Al, Ni, Mn, Cr, Cu, Fe, Mg, Si, Ti, Zr, V, Zn, Pb, S, P, Sn, As, Bi and Sb.

In some embodiments, an adhesive force between the separator and the anode plate is 0.5 N/m ~ 40 N/m.

In some embodiments, an adhesive force between the separator and the cathode plate is 0.5 N/m ~ 80 N/m.

In some embodiments, the separator includes one or more of polyethylene, polypropylene, polyvinylidine difluoride, modifiedpolyvinylidine difluoride, polyacrylate, modified polyacrylate, modified polyethylene and modified polypropylene.

The embodiments of the application further provide a battery, the battery includes a shell and the aforesaid cell, the cell is received into the shell.

In conclusion, according to the cell of the application, the thickness a of the first current collector satisfies the relational expression by adjusting the thickness a of the first current collector, the thickness T of the cell, the rigidity G of the cell, the number L of layers of the electrode assembly and the concentration c of the lithium salt, thereby greatly improving the mechanical strength of the cell, and thus improving the safety performance of the cell.

**Brief Description of the Figures**

Fig. 1 is a schematic view of a cell in one embodiment of the application.

Fig. 2 is a schematic view of a cell in another embodiment of the application.

Fig. 3 is a schematic plan view of a cell shown in Fig. 1.

Fig. 4 is a relational graph between a pressing displacement of a pressure head and a load borne by the cell.

Fig. 5 is a schematic plan view of a cell shown in Fig. 3 in a blunt nail crush test.

| Description of Reference Signs of Main Elements | |
|---|---|
| Cell | 10 |
| Electrode assembly | 11 |
| Anode plate | 111 |
| First current collector | 1111 |
| First active substance layer | 1112 |
| Separator | 112 |
| Cathode plate | 113 |
| Second current collector | 1131 |
| Second active substance layer | 1132 |
| Package | 12 |
| Electrolyte solution | 13 |
| First tab | 14 |
| Second tab | 15 |
| Blunt nail | 200 |

The application will be further described in the following detailed description of the embodiments with reference to the above drawings.

**Detailed Description of the Embodiments**

The technical solutions in the embodiments of the application will be clearly and completely described below in conjunction with the drawings in the embodiments of the application. Obviously, the described embodiments are only some, not all of the embodiments of the application. Based on the embodiments herein, all other embodiments obtained by those of ordinary skill in the art without any creative work also fall into the protection scope of the application.

Unless otherwise defined, all technical and scientific terms used herein have the same meaning as those generally understood by those skilled in the art belonging to the technical field of the application. All terms used in the Description of the application only aim to describe the specific embodiments and are not intended to limit the application.

Some embodiments of the application are elaborated in conjunction with the accompanying drawings. Without conflict, the following embodiments and features in these embodiments can be combined with each other.

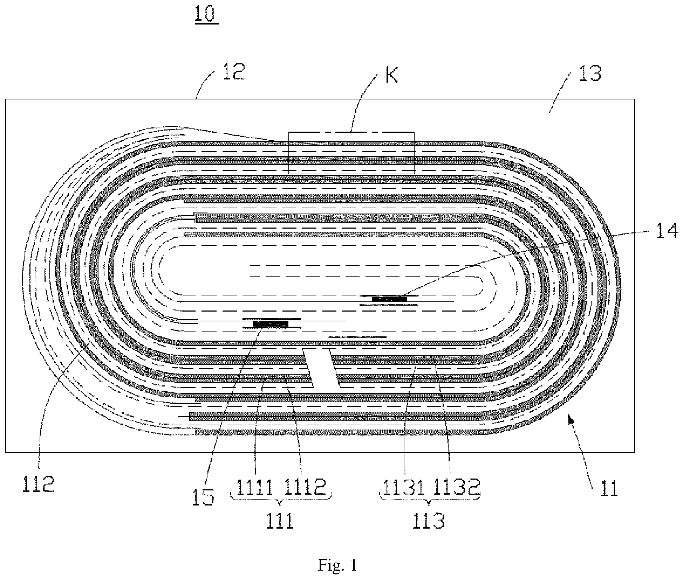

Referring to Fig. 1, an embodiment of the application provides a cell 10. The cell 10 includes an electrode assembly 11, a package 12 that receives the electrode assembly 11 and an electrolyte solution 13. The electrolyte solution 13 is received into the package 12. The electrolyte solution 13 includes a lithium salt. In other embodiments, the electrolyte solution 13 may further include some common organic solvents, for example, ethylene carbonate, propylene carbonate, ethyl methyl carbonate and diethyl carbonate.

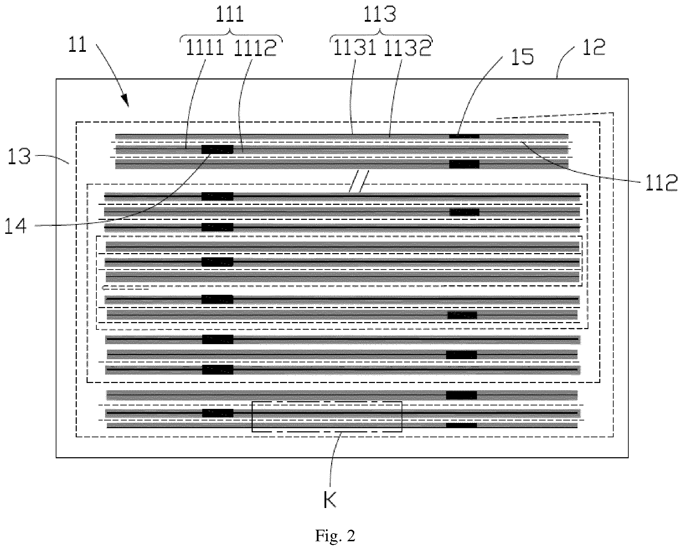

Referring to Figs. 1 and 2, the electrode assembly 11 is formed by sequential winding or stacking of an anode plate 111, a separator 112 and a cathode plate 113.

In some embodiments, the anode plate 111 includes a first current collector 1111 and a first active substance layer 1112 arranged on the first current collector 1111. A transverse strength of the first current collector 1111 is 50 MPa ~ 600 MPa. A longitudinal strength of the first current collector 1111 is 50 MPa ~ 600 MPa. The first current collector 1111 includes one or more of elements, including Al, Ni, Mn, Cr, Cu, Fe, Mg, Si, Ti, Zr, V, Zn, Pb, S, P, Sn, As, Bi and Sb. Elements in the first current collector 1111 can be tested by an inductively coupled plasma-optical emission spectrometry (ICP-OES).

In one embodiment, the first active substance layer 1112 includes a first active substance and a first adhesive agent. A mass fraction of the first active substance is 97% ~ 99%. A mass fraction of the first adhesive agent is 0.5% ~ 1.5%. Monomer products, produced from a test for the first adhesive agent by a pyrolysis gas chromatography mass spectroscopy (PY-GCMS), include one or more of butadiene, acrylonitrile, styrene, methyl methacrylate, butyl acrylate, vinyl pyrrolidone, ethylhexyl methacrylate, iso-octyl acrylate, polyvinylidine difluoride, 9-octadecenenitrile, propyl propionate, ethyl propionate, polyacrylic acid (PAA), N-methylpyrrolidone and 4-phenylcyclohexanone.

In this embodiment, the anode plate 111, the cathode plate 113 adjacent to the anode plate 111 and two layers of separator 112 adjacent to the anode plate 111 or the cathode plate 113 are defined as one layer of the electrode assembly 11 (referring to a K area in Fig. 1, or referring to a K area in Fig. 2). A thickness a of the first current collector 1111 satisfies the following formula: $0.02T/(L+5)\times c\leq a\leq(0.3L^2)/(GT^2)$, which is calculated by numerical values of various parameters, where, T is a thickness of the cell 10 (in mm), c is a concentration of the lithium salt (in mol/L), G is a rigidity of the cell 10 in the width direction (in N/mm), and L is a number of layers of the electrode assembly 11.

In this embodiment, a thickness T of the cell 10 is 1 mm ~ 12 mm. In this embodiment, a thickness T of the cell 10 is 3 mm ~ 6 mm. In another embodiment, a thickness T of the cell 10 is 1 mm ~ 5 mm. In another embodiment, a thickness T of the cell 10 is 2 mm ~ 10 mm.

In another embodiment, a thickness a of the first current collector 1111 is 0.003 mm ~ 0.04 mm. In one embodiment, a thickness a of the first current collector 1111 is 0.003 mm ~ 0.02 mm. In another embodiment, a thickness a of the first current collector 1111 is 0.004 mm ~ 0.16 mm.

In this embodiment, a rigidity G of the cell 10 in a width direction is 50 N/mm ~ 400 N/mm. In one embodiment, a rigidity G of the cell 10 in a width direction is 100 N/mm ~ 400 N/mm. In another embodiment, a rigidity G of the cell 10 in a width direction is 50 N/mm ~ 200 N/mm. In a yet embodiment, a rigidity G of the cell 10 in a width direction is 100 N/mm ~ 300 N/mm.

In this embodiment, a concentration c of the lithium salt is 0.5 mol/L ~ 2 mol/L. In one embodiment, a concentration c of the lithium salt is 0.5 mol/L ~ 1.5 mol/L. In another embodiment, a concentration c of the lithium salt is 0.8 mol/L ~ 1.5 mol/L. In a yet embodiment, a concentration c of the lithium salt is 1.0 mol/L - 2.0 mol/L.

In this embodiment, the cathode plate 113 includes a second current collector 1131 and a second active substance layer 1132 arranged on the second current collector 1131. A transverse strength of the second current collector 1131 is 50 MPa - 300 MPa. A longitudinal strength of the second current collector 1131 is 50 MPa - 300 MPa. The second current collector 1131 includes one or more of elements, including Al, Ni, Mn, Cr, Cu, Fe, Mg, Si, Ti, Zr, V, Zn, Pb, S, P, Sn, As, Bi and Sb. Elements in the second current collector 1131 are tested by the ICP-OES test.

The second active substance layer 1132 includes a second active substance and a second adhesive agent. A mass fraction of the second active substance is 96% - 99%. A mass fraction of the second adhesive agent is 0.5% - 2%. The second adhesive agent can be selected from, but not limited to one or more of copolymers of polyethylene oxide, polyvinylidene difluoride, butadiene styrene rubber, vinylidene fluoride and hexafluoropropylene. Monomer products, produced from a test for the second adhesive agent by a pyrolysis gas chromatography mass spectroscopy (PY-GCMS), include one or more of butadiene, acrylonitrile, styrene, methyl methacrylate, butyl acrylate, vinyl pyrrolidone, ethylhexyl methacrylate, iso-octyl acrylate, polyvinylidine difluoride, 9-octadecenenitrile, propyl propionate, ethyl propionate, polyacrylic acid (PAA), N-methylpyrrolidone and 4-phenylcyclohexanone.

Furthermore, the second active substance layer 1132 includes a conductive agent. A mass fraction of the conductive agent is 0.5% ~ 2%. The conductive agent can be selected from, but not limited to one or more of acetylene black, carbon black, conductive carbon black (Super P), Ketjen black, single-walled carbon nanotube, multi-walled carbon nanotube, carbon nanofiber and graphene.

In some embodiments, the separator 112 includes one or more of polyethylene, polypropylene, polyvinylidine difluoride, modifiedpolyvinylidine difluoride, polyacrylate, modified polyacrylate, modified polyethylene, and modified polypropylene. An adhesive force between the separator 112 and the anode plate 111 is 0.5 N/m ~ 40 N/m. An adhesive force between the separator 112 and the cathode plate 113 is 0.5 N/m ~ 80 N/m.

Furthermore, referring to Figs. 1, 2 and 3, the cell 10 further includes a first tab 14 and a second tab 15. In some embodiments, the first tab 14 is connected to the anode plate 111 and extends out of the package 12; the second tab 15 is connected to the cathode plate 113 and extends out of the package 12.

The following paragraphs will elaborate the cell 10 of the application by virtue of embodiments and contrast Examples.

## Embodiment 1

Referring to Fig. 1, the cell 10 includes an electrode assembly 11, a package 12 that receives the electrode assembly 11, an electrolyte solution 13, a first tab 14 and a second tab 15. The electrolyte solution 13 is received into the package 12. The electrolyte solution 13 includes a lithium salt.

The electrode assembly 11 is formed by sequential winding or stacking of an anode plate 111, a separator 112 and a cathode plate 113. The first tab 14 is connected to the anode plate 111 and extends out of the package 12. the second tab 15 is connected to the cathode plate 113 and extends out of the package 12. The anode plate 111 includes a first current collector 1111 and a first active substance layer 1112 arranged on the first current collector 1111.

In this embodiment, a thickness T of the cell 10 is 3.3 mm. A number L of layers of the electrode assembly 11 is 11. A rigidity G of the cell 10 in a width direction is 86.6 N/mm. A concentration c of the lithium salt is 1.2 mol/L. A thickness a of the first current collector 1111 is 0.008 mm. In Embodiment 1, the thickness a of the first current collector 1111 satisfies the following formula:

$$0.02T/(L+5){\times}c{\leq}a{\leq}(0.3L^2)/(GT^2).$$

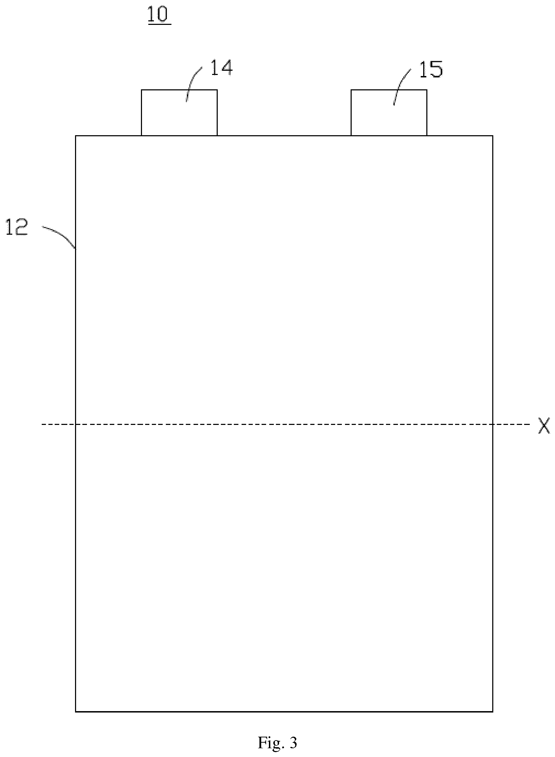

where, the rigidity G of the cell 10 in a width direction (namely a dotted line X direction in Fig. 3) is tested by a three point bending test. The three point bending test includes the following steps:

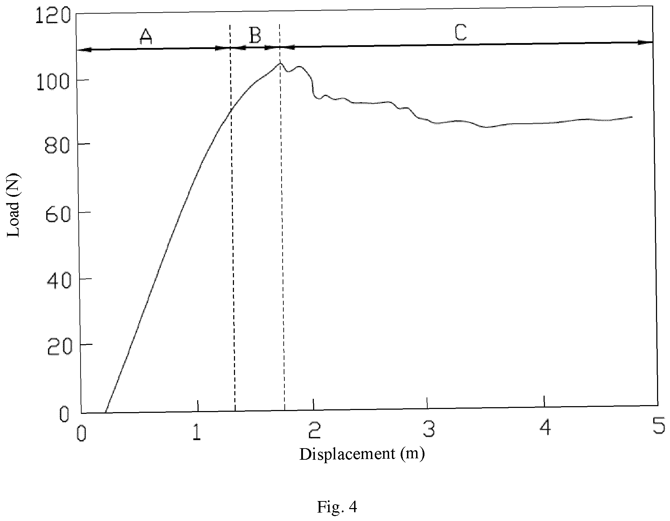

firstly, placing the cell 10 on two support points between which there is a certain spacing; next, applying downward force to the cell 10 above a central point between two support points by a pressure head (not shown); and then recording a displacement pressed by the pressure head and a load borne by the cell 10 corresponding to the displacement, and in this way, drawing a relational graph between the displacement pressed by the pressure head and the load borne by the cell 10 (referring to Fig. 4).

Referring to Fig. 4, an area A is an elastic deformation stage of the cell 10. The rigidity G of the cell 10 in the width direction is 86.6 N/mm by calculating a straight slope of a line segment in the area A. Continuously referring to Fig. 4, the cell 10 has a yield point in an area B; in an area C, all plates and the separator in the yielded cell 10 are separated or slide to increase the deformation, and the load borne by the cell 10 decreases.

A heavy impact test (namely, impact test) is conducted for the cell 10 in Embodiment 1. The heavy impact test includes the following steps:

Firstly, charging the cell 10 to be in a 100% stage of charge (SOC) at a room temperature (25°C), wherein a voltage of the cell 10 is 4.4 V; next, placing the cell 10 on a platform, and then transversely placing a metal bar with a diameter of 15.8 mm (for example, iron bar) on a geometric center of the cell 10; and then using a heavy hammer with a mass of 9.1 kg to impact a surface, placed with the metal bar, of the cell 10 in a free falling state from 610 mm, and stopping the test after a surface temperature of the cell 10 drops to room temperature. If the cell 10, after being subject to the heavy impact test, has no fire or explosion, the cell 10 is determined to pass the heavy impact test.

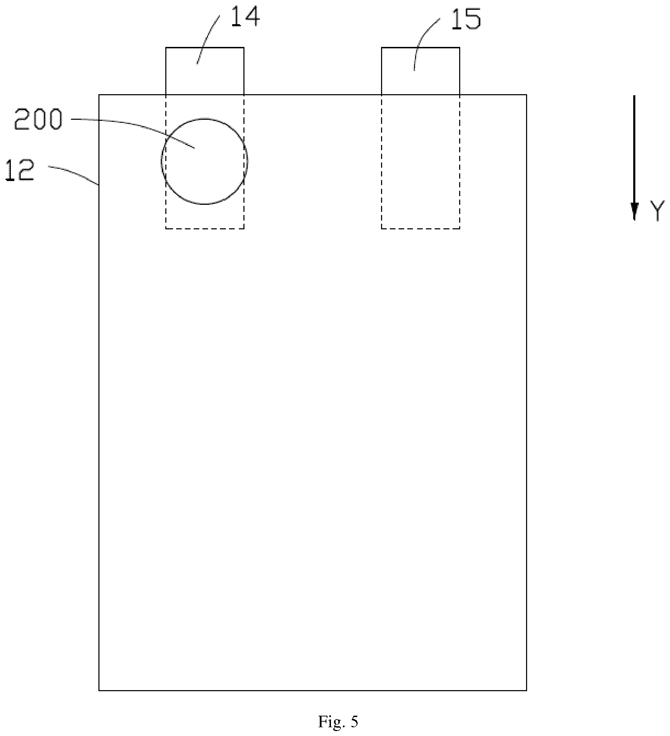

The cell 10 in Embodiment 1 is subject to the blunt nail test. The blunt nail test includes the following steps:
Firstly, charging the cell 10 to be in a 100% stage of charge (SOC) at a room temperature (25°C), wherein a voltage of the cell 10 is 4.4V; and then, referring to Fig. 5, pressing a blunt nail 200 with a half-round head to a central place of the first tab 14 (for example, anode tab) within the package 12 in a length direction (Y-axis direction) at a lift speed of 300 N/min±10 N/min, wherein test is stopped after pressure, applied to the cell 10, gradually rises to 1,300N from 0N. If a surface temperature of the cell 10, subject to the blunt nail test, is less than 200°C and the cell 10 does not smoke, fire and explode, the cell 10 is determined to pass the blunt nail test.

## Embodiment 2

Embodiment 2 differs from Embodiment 1 in that the thickness T of the cell 10 in Embodiment 2 is 4.5 mm, the number L of layers of the electrode assembly 11 is 13, the rigidity G of the cell 10 in the width direction is 95 N/mm, and the concentration c of the lithium salt is 1.0 mol/L. A thickness a of the first current collector 1111 is 0.006 mm. In Embodiment 2, the thickness a of the first current collector 1111 also satisfies the above-mentioned formula:

## Embodiment 3

Embodiment 3 differs from Embodiment 2 that the rigidity G of the cell 10 in the width direction in Embodiment 3 is 168 N/mm, and the concentration c of the lithium salt is 1.8 mol/L, and the thickness a of the first current collector 1111 is 0.012 mm. In Embodiment 3, the thickness a of the first current collector 1111 also satisfies the above-mentioned formula.

## Embodiment 4

Embodiment 4 differs from Embodiment 2 in that the thickness T of the cell 10 in Embodiment 4 is 2.5 mm, the number L of layers of the electrode assembly 11 is 9, the rigidity G of the cell 10 in the width direction is 219 N/mm, and the thickness a of the first current collector 1111 is 0.016 mm. In Embodiment 4, the thickness a of the first current collector 1111 also satisfies the above-mentioned formula.

## Embodiment 5

Embodiment 5 differs from Embodiment 1 in that the electrode assembly 11 in Embodiment 5 is formed by the sequential stacking of the anode plate 111, the separator 112 and the cathode plate 113.

## Embodiment 6

Embodiment 6 differs from Embodiment 2 in that the electrode assembly 11 in Embodiment 6 is formed by the sequential stacking of the anode plate 111, the separator 112 and the cathode plate 113.

## Embodiment 7

Embodiment 7 differs from Embodiment 3 in that the electrode assembly 11 in Embodiment 7 is formed by the sequential stacking of the anode plate 111, the separator 112 and the cathode plate 113.

## Embodiment 8

Embodiment 8 differs from Embodiment 4 in that the electrode assembly 11 in Embodiment 8 is formed by the sequential stacking of the anode plate 111, the separator 112 and the cathode plate 113.

## Contrast Example 1

Contrast Example 1 differs from Embodiment 1 in that the thickness T of the cell 10 in Contrast Example 1 is 4.5 mm, the number L of layers of the electrode assembly 11 is 15, the rigidity G of the cell 10 in the width direction is 121 N/mm, and the concentration c of the lithium salt is 1.8 mol/L. In Contrast Example 1, a thickness a of the first current collector 1111 does not satisfy the above-mentioned formula.

Contrast Example 2 differs from Embodiment 5 in that the thickness T of the cell 10 in Contrast Example 1 is 4.5 mm, the number L of layers of the electrode assembly 11 is 15, the rigidity G of the cell 10 in the width direction is 121 N/mm, and the concentration c of the lithium salt is 1.8 mol/L. In Contrast Example 2, a thickness a of the first current collector 1111 does not satisfy the above-mentioned formula.

The preparation conditions and corresponding test results of Embodiments 1-8 and Contrast Examples 1-2 are listed in Table 1 below.

**Table 1 Preparation Conditions and Corresponding Test Results of Embodiments 1-8 and Contrast Examples 1-2**

| | Type of cell | Thickness of cell, T (mm) | Number of layers of electrode assembly, L (layer) | Thickness of first current collector, a (mm) | Rigidity of cell in a width direction, G (N/mm) | Concentration of lithium salt, c (mol/L) | Whether a thickness a of the first current collector satisfies this relational expression | Pass rate of heavy impact test | Pass rate of bluntnail test |
|---|---|---|---|---|---|---|---|---|---|
| Embodiment 1 | Wound | 3.3 | 11 | 0.008 | 86.6 | 1.2 | Yes | 100% | 100% |
| Embodiment 2 | Wound | 4.5 | 13 | 0.006 | 95 | 1.0 | Yes | 100% | 100% |
| Embodiment 3 | Wound | 4.5 | 13 | 0.012 | 168 | 1.8 | Yes | 100% | 100% |
| Embodiment 4 | Wound | 2.5 | 9 | 0.016 | 219 | 1.0 | Yes | 100% | 100% |
| Embodiment 5 | Stacked | 3.3 | 11 | 0.008 | 86.6 | 1.2 | Yes | 100% | 100% |
| Embodiment 6 | Stacked | 4.5 | 13 | 0.006 | 95 | 1.0 | Yes | 100% | 100% |
| Embodiment 7 | Stacked | 4.5 | 13 | 0.012 | 168 | 1.8 | Yes | 100% | 100% |
| Embodiment 8 | Stacked | 2.5 | 9 | 0.016 | 219 | 1.0 | Yes | 100% | 100% |
| Contrast Example 1 | Wound | 4.5 | 15 | 0.008 | 121 | 1.8 | No | 65% | 90% |
| Contrast Example 2 | Stacked | 4.5 | 15 | 0.008 | 121 | 1.8 | No | 65% | 90% |

Referring to Table 1, it can be seen, from the comparison between Embodiment 2 and Contrast Example 1, that the number L of layers of the electrode assembly 11 is smaller than that in Contrast Example 1, the thickness a of the first current collector 1111 in Embodiment 2 is smaller than that in Contrast Example 1, and the rigidity G of the cell 10 in the width direction in Embodiment 2 is obviously smaller than that in Contrast Example 1. As can be seen, when the thickness T of the cell 10 is certain, the rigidity G of the cell 10 in the width direction is affected by the number L of layers of the electrode assembly 11 and the thickness a of the first current collector 1111. The bigger the number of layers L of the electrode assembly 11 and the thickness a of the first current collector 1111, the higher the rigidity G of the cell 10 in the width direction.

It can be seen, from the comparison between Embodiment 3 and Contrast Example 1, that the number L of layers of the electrode assembly 11 in Embodiment 3 is smaller than that in Contrast Example 1, the thickness a of the first current collector 1111 in Embodiment 3 is smaller than that in Contrast Example 1, and the rigidity G of the cell 10 in the width direction in Embodiment 3 is obviously smaller than that in Contrast Example 1. As can be seen, when the thickness T of the cell 10 is certain, the rigidity G of the cell 10 in the width direction, relative to the number L of layers of the electrode assembly 11, is easier affected by the thickness a of the first current collector 1111. Besides, relative to Contrast Example 1, when the concentration c of the lithium salt in Embodiment 3 is consistent with the one in Contrast Example 1, the rigidity G of the cell 10 in the width direction can be improved within a certain scope, and the pass rate of the cell 10 in the heavy impact and blunt nail tests can be improved obviously.

It can be seen, from the comparison between Embodiment 1 and Contrast Example 1, that the thickness T of the cell 10 in Embodiment 1 is smaller than that in Contrast Example 1, and the number L of layers of the electrode assembly 11 in Embodiment 1 is smaller than that in Contrast Example 1, while the rigidity G of the cell 10 in the width direction in Embodiment 1 is obviously smaller than that in Contrast Example 1. As can be seen, when the thickness a of the first current collector 1111 is certain, the rigidity G of the cell 10 in the width direction is affected by the number L of layers of the electrode assembly 11 and the thickness T of the cell 10. The bigger the number of layers L of the electrode assembly 11 and the thickness T of the cell 10, the higher the rigidity G of the cell 10 in the width direction.

It can be seen, from the comparison between Embodiments 2 and 3, that the rigidity G of the cell 10 in the width direction can be obviously improved by increasing the thickness a of the first current collector 1111 under the premise of certain thickness T of the cell 10 and the number L of layers of the electrode assembly 11. The higher the rigidity G of the cell 10 in the width direction, the smaller the deformation degree after the cell 10 suffers mechanical outer force (for instance: high speed impact, weight extrusion, and drop), a damaged fracture thereof will be more neat. Hence, the higher a probability that the anode plate 111 is in contact with the cathode plate 113, the smaller the number of short-circuit points, so that the using safety of the cell 10 is greatly improved. Besides, it can be understood that a work process of the cell 10 is actually a redox reaction with lithium ions. This reaction is conducted by adding a certain amount of lithium salt into the electrolyte solution 13 so as to accelerate a redox reaction velocity, but the lithium salt will not be consumed in the redox reaction. Hence, heat from single short-circuit point in the cell 10, namely a magnitude of instantaneous current, can be controlled by the lithium salt concentration. In this way, the concentration of the lithium salt is defined within the proper scope, which cannot only affect the performance of the cell 10 at normal work, but also decrease the redox reaction velocity during the short circuit, which ensures the using safety of the cell 10.

It can be seen from, Embodiments 1 and 5, Embodiments 2 and 6, Embodiments 3 and 7 and Embodiments 4 and 8, that the thickness T of the cell 10, the number L of layers of the electrode assembly 11, the rigidity G of the cell 10 in the width direction, the concentration c of the lithium salt and the thickness a of the first current collector 1111 will not affect the overall mechanical performance of the cell 10 when the type of the cell 10 is changed under certain circumstances.

In view of the above, the thickness a of the first current collector 1111, the thickness T of the cell 10, the rigidity G of the cell 10 and the concentration c of the lithium salt are defined to allow the thickness a of the first current collector 1111 to satisfy the relational expression of a, so that less short-circuit points are found in the cell 10 when the cell 10 is subject to the mechanical outer force, and the heat of single short-circuit point is low. Hence, even if the interior of the cell 10 is shortcircuited, the cell 10 will not have the problem that the heat is out of control due to excessive heat accumulated intermittently caused by the interior short circuit.

Besides, the embodiments of the application further provide a battery. The battery includes a shell (not shown) and the cell 10. The cell 10 is received into the shell.

The above embodiments are merely used to illustrate, instead of limiting, the technical solution of the application. Although the application is elaborated with reference to the preferred embodiments, those of ordinary skill in the art should understood to amend or equivalently replace the technical solution of the application without departure from the spirit and essential characteristics thereof.

**Claims**

1. A cell, comprising an electrode assembly, a package that receives the electrode assembly and an electrolyte solution, the electrolyte solution being received into the package, the electrode assembly being formed by sequential winding or stacking of an anode plate, a separator and a cathode plate, the anode plate comprising a first current collector and a first active substance layer arranged on the first current collector, the electrolyte solution comprising a lithium salt,
   **characterized in that** the anode plate, the cathode plate adjacent to the anode plate and two layers of the separator adjacent to the anode plate or the cathode plate are defined as one layer of the electrode assembly; a thickness a of the anode current collector satisfies the following formula: $0.02T/(L+5) \times c \leq a \leq (0.3L^2)/(GT^2)$, which is calculated by numerical values of various parameters; wherein T is a thickness of the cell (in mm), c is a concentration of the lithium salt (in mol/L), G is a rigidity of the cell in a width direction (in N/mm), and L is a number of layers of the electrode assembly.

2. The cell according to claim 1, **characterized in that** a thickness of the cell is 1 mm ~ 12 mm.

3. The cell according to claim 1, **characterized in that** a thickness of the first current collector is 0.003 mm ~ 0.04 mm.

4. The cell according to claim 1, **characterized in that** a rigidity of the cell in a width direction is 50 N/mm ~ 400 N/mm.

5. The cell according to claim 1, **characterized in that** a concentration of the lithium salt is 0.5 mol/L ~ 2 mol/L.

6. The cell according to claim 1, **characterized in that** a transverse strength of the first current collector is 50 MPa ~ 600 MPa.

7. The cell according to claim 1, **characterized in that** a longitudinal strength of the first current collector is 50 MPa ~ 600 MPa.

8. The cell according to claim 1, **characterized in that** the cathode plate comprises a second current collector and a second active substance layer arranged on the second current collector, and a transverse strength of the second current collector is 50 MPa ~ 300 MPa.

9. The cell according to claim 8, **characterized in that** a longitudinal strength of the second current collector is 50 MPa ~ 300 MPa.

10. A battery, comprising a shell, **characterized in that** the battery comprises the cell according to any one of claims 1-9, and the cell is received into the shell.

Fig. 1

Fig. 2

Fig. 3

Fig. 4

Fig. 5

## INTERNATIONAL SEARCH REPORT

| International application No. |
|---|
| **PCT/CN2020/078645** |

### A. CLASSIFICATION OF SUBJECT MATTER

H01M 4/13(2010.01)i

According to International Patent Classification (IPC) or to both national classification and IPC

### B. FIELDS SEARCHED

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT; WPI; EPODOC; CNKI: 电芯, 电池, 电极组件, 厚度, 刚度, 刚性, 层数, battery, cell, core, electrode, assembly, thickness, stiffness, rigidity, layer

### C. DOCUMENTS CONSIDERED TO BE RELEVANT

| Category* | Citation of document, with indication, where appropriate, of the relevant passages | Relevant to claim No. |
|---|---|---|
| A | CN 101908613 A (SAMSUNG SDI CO., LTD.) 08 December 2010 (2010-12-08) description, paragraphs 38-40, 53-55, figures 6-7 | 1-10 |
| A | CN 104064697 A (CHERY AUTOMOBILE CO., LTD.) 24 September 2014 (2014-09-24) entire document | 1-10 |
| A | CN 203013803 U (ICON ENERGY SYSTEM (SHENZHEN) CO., LTD.) 19 June 2013 (2013-06-19) entire document | 1-10 |
| A | KR 20170114404 A (SAMSUNG SDI CO., LTD.) 16 October 2017 (2017-10-16) entire document | 1-10 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 November 2020** | **01 December 2020** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/078645**

| Patent document cited in search report | | | Publication date (day/month/year) | Patent family member(s) | | | Publication date (day/month/year) |
|---|---|---|---|---|---|---|---|
| CN | 101908613 | A | 08 December 2010 | KR | 101118259 | B1 | 20 March 2012 |
| | | | | EP | 2267830 | B1 | 25 July 2012 |
| | | | | US | 2010310912 | A1 | 09 December 2010 |
| | | | | US | 8283064 | B2 | 09 October 2012 |
| | | | | JP | 2010282945 | A | 16 December 2010 |
| | | | | CN | 101908613 | B | 14 November 2012 |
| | | | | EP | 2267830 | A1 | 29 December 2010 |
| | | | | KR | 20100131166 | A | 15 December 2010 |
| CN | 104064697 | A | 24 September 2014 | None | | | |
| CN | 203013803 | U | 19 June 2013 | None | | | |
| KR | 20170114404 | A | 16 October 2017 | None | | | |

Form PCT/ISA/210 (patent family annex) (January 2015)